# EUROPÄISCHE PATENTSCHRIFT

(11) **EP 1 406 778 B1**
(45) Veröffentlichungstag und Bekanntmachung des Hinweises auf die Patenterteilung: **02.02.2005**
(21) Anmeldenummer: 03722377.3
(22) Anmeldetag: 01.04.2003
(51) Int. Cl.: B60J 7/22

(54) **HARDTOP-FAHRZEUGDACH MIT MINDESTENS EINEM STARREN DACHTEIL**
HARDTOP VEHICLE ROOF HAVING AT LEAST ONE RIGID ROOF PART
TOIT DE VEHICULE, AMOVIBLE, COMPORTANT AU MOINS UNE PARTIE RIGIDE

(30) Priorität: 12.04.2002 DE 10216431
(43) Veröffentlichungstag der Anmeldung: 14.04.2004
(73) Patentinhaber: CTS Fahrzeug-Dachsysteme GmbH, 21079 Hamburg (DE)
(72) Erfinder: HASSELGRUBER, Andreas, 71735 Eberdingen-Nussdorf (DE); WEZYK, Wojciech, 71065 Sindelfingen (DE); SCHNELL, Emil, 78464 Konstanz (DE)
(74) Vertreter: Müller, Gottfried
(86) Internationale Anmeldenummer: PCT/EP2003/003385
(87) Internationale Veröffentlichungsnummer: WO 2003/086802

(56) Entgegenhaltungen:
- DE-A- 19 646 240
- DE-A- 19 752 068
- DE-A- 19 913 033

## Beschreibung

Die Erfindung bezieht sich auf ein Hardtop-Fahrzeugdach mit mindestens einem starren Dachteil nach dem Oberbegriff des Anspruches 1.

Hardtop-Fahrzeugdächer werden in Cabriolet-Fahrzeugen eingesetzt und weisen in der Regel zwei oder drei in sich starre Dachteile auf, die in Schließposition in Fahrzeuglängsrichtung gesehen hintereinander liegend angeordnet sind und einen Fahrzeuginnenraum überdecken und zum Öffnen des Daches in eine Ablageposition überführbar sind, in der die Dachteile in einem heckseitigen Verdeckkasten verstaut sind. Bei Cabriolet-Fahrzeugen besteht generell das Problem, dass in Offenstellung des Fahrzeugdaches ein das Befinden der Fahrzeuginsassen beeinträchtigender Luftzug auf Grund von Luftverwirbelungen im Fahrzeuginnenraum entsteht. Zur Reduzierung dieser Luftverwirbelungen ist in Cabriolet-Fahrzeugen üblicherweise ein Windschott vorgesehen, welches hinter den Fahrzeugsitzen angeordnet ist und als aufrecht stehende Scheibe oder Netz ausgeführt ist. Ein derartiges Windschott ist in der Druckschrift DE 199 13 033 A1 offenbart. Das Windschott dieser Druckschrift ist zwischen einer abgesenkten Außerbetriebsstellung, welche das Windschott in geschlossener Fahrzeugdachposition einnimmt, und einer Funktionsstellung zu verstellen, in welche das Windschott in geöffneter Fahrzeugdachposition überführt wird. Das Windschott ist vertikal verschieblich angeordnet und ist in seiner Außerbetriebsstellung in einem Aufnahmekasten aufgenommen, welcher dem Kofferraum bzw. dem Aufnahmeraum für das Fahrzeugdach vorgelagert ist.

Diese Ausführung weist den Nachteil auf, dass die Fahrzeugdachbewegung und die Windschottbewegung nicht gekoppelt sind, sondern dass das Windschott unabhängig vom Fahrzeugdach betätigt und üblicherweise von Hand verstellt werden muss. Kopplungen zwischen den Bewegungen von Fahrzeugdach und Windschott setzen entweder eine sehr aufwendige Kinematik oder einen separaten Stellmotor für das Windschott voraus.

Des Weiteren ist nachteilig, dass der Aufnahmeraum für das Windschott einen zusätzlichen Raum beansprucht, wodurch sowohl der frei verfügbare Kofferraum in geschlossener Fahrzeugdachposition als auch das Volumen des Verdeckkastens zur Aufnahme des Fahrzeugdaches eingeschränkt werden.

Die Druckschrift DE 100 32 378 C2 zeigt ein zweiteiliges Hardtop-Fahrzeugdach mit zwei Dachteilen, die in Ablageposition in einem heckseitigen Verdeckkasten zu verstauen sind. Das vordere Dachteil ist in Ablageposition etwa senkrecht aufgestellt, derart, dass der vordere Abschnitt des vorderen Dachteiles über die Karosserielinie hinausragt und hierdurch ein windschott bildet.

Die gattungsgemäße Druckschrift DE 197 52 068 A1 offenbart ein Hardtop-Fahrzeugdach mit insgesamt drei starren Dachteilen, die bei geschlossenem Fahrzeugdach hintereinander liegend angeordnet sind und den Fahrzeuginnenraum überdecken. Das vordere und das mittlere Fahrzeugdach sind in Ablageposition in einem heckseitigen Verdeckkasten verstaut, welcher von dem hinteren Dachelement überdeckt wird, das bei geöffnetem Dach die Funktion eines Verdeckkastendeckels übernimmt. Das hintere Dachelement verbleibt auch bei geöffnetem Fahrzeugdach in einer sich über die Karosserielinie erhebenden Position.

Das mittlere Dachelement ist über seitliche Dachstützen gelenkig an der Fahrzeugkarosserie angeschlagen, wobei die Dachstützen einen über die Drehachse hinausragenden, unteren Abschnitt aufweisen, welcher bei der Ablagebewegung des mittleren Dachelements aus einer nach unten ragenden Position um näherungsweise 180° nach oben geschwenkt wird und sich hierdurch über die Karosserielinie erhebt. Dieser untere Abschnitt der Seitenstützen bildet bei geöffnetem Dach einen Überrollbügel, an dem ein Windschott befestigt sein kann. Dieses Windschott wird ebenso wie der Überrollbügel bei der Ablagebewegung des Fahrzeugdaches automatisch aus seiner abgesenkten Position in seine aufgestellte Funktionsposition verschwenkt.

Der Erfindung liegt das Problem zu Grunde, ein Hardtop-Fahrzeugdach anzugeben, das mit einem Windschott ausgestattet ist, welches mit einfachen Mitteln zwischen seiner Funktionsund Außerfunktionsposition zu verstellen ist. Des Weiteren sollen zweckmäßig der Kofferraum und/oder der Verdeckkasten keine Einschränkung durch das Windschott erfahren.

Dieses Problem wird erfindungsgemäß mit den Merkmalen des Anspruches 1 gelöst. Die Unteransprüche geben zweckmäßige Weiterbildungen an.

Erfindungsgemäß ist vorgesehen, dass das starre Dachteil in Ablageposition eine aufrecht stehende Position hinter den Fahrzeugsitzen einnimmt und hierdurch ein Windschott bildet. Das Dachteil ist mit dem Windschott identisch; somit entfällt die Notwendigkeit, ein separates Bauteil als Windschott vorzusehen. Außerdem ist kein separater Antrieb bzw. eine aufwendige kinematische Kopplung zum Aufstellen und Absenken des Windschotts erforderlich, da das starre Dachteil seine Windschottposition selbsttätig in der Ablagestellung des Fahrzeugdaches einnimmt. Schließlich kann auch die Größe des frei verfügbaren Kofferraumes bzw. des Verdeckkastens maximiert werden, da keine einschränkenden Bauteile wie zum Beispiel Aufnahmeeinrichtungen für das Windschott vorgehalten werden müssen und im übrigen das Dachteil in seiner Windschottposition sich teilweise oder vollständig außerhalb des Verdeckkastens und des Kofferraumes befindet und daher diese Bereiche nicht einschränkt.

In einer vorteilhaften Weiterbildung ist vorgesehen, dass das Hardtop-Fahrzeugdach zumindest zwei starre Dachteile umfasst, die in Schließposition des Daches in Fahrzeuglängsrichtung gesehen hintereinander angeordnet sind, wobei eines der Dachteile in Ablageposition mit dem Windschott identisch ist und die aufrecht stehende Position einnimmt, das andere Dachteil dagegen im heckseitigen Verdeckkasten verstaut ist. Bei dem das Windschott bildenden Dachteil handelt es sich insbesondere um das vordere Dachteil, welches in Schließposition des Daches unmittelbar am Windschutzscheibenrahmen festgelegt ist. Das vordere Dachteil verbleibt in der Ablageposition des Daches in der Windschottstellung außerhalb des Verdeckkastens bzw. des Kofferraumes.

Der Verdeckkasten ist vorteilhaft von einem Verdeckkastendeckel verschlossen, wobei das Dachteil, welches in Ablageposition das Windschott bildet, zumindest geringfügig in einen Randspalt einragen kann, welcher zwischen der Vorderkante des Verdeckkastendeckels und einer Wandung des Verdeckkastens gebildet ist. Dieser Spalt wird insbesondere für die Kinematik bzw. die Anbindung des Dachteiles an die Fahrzeugkarosserie oder an ein weiteres Dachteil benötigt, wobei der Spalt in Bezug auf Form und Größe an den Querschnitt des als Windschott fungierenden Dachteiles angepasst und dementsprechend schmal ausgeführt sein kann. Der Verdeckkastendeckel überdeckt somit beinahe die gesamte Verdeckkastenöffnung, wodurch die Notwendigkeit entfällt, ein zusätzliches, vom Verdeckkasten separat ausgebildetes Deckelteil vorzusehen, welches ansonsten im Stand der Technik entweder am Verdeckkastendeckel oder an der Fahrzeugkarosserie gehalten und gegenüber dem haltenden Bauteil verstellbar ausgeführt sein muss. Bei der erfindungsgemäßen Lösung ist dagegen ein derartiges Deckelteil nicht erforderlich, wodurch eine weitere konstruktive Vereinfachung erzielt wird.

Gemäß einer weiteren vorteilhaften Ausführung ist vorgesehen, dass das Dachteil, welches in geöffneter Dachstellung das Windschott bildet, zumindest einen Abschnitt aufweist, welcher durchsichtig ausgebildet ist. Der durchsichtige Abschnitt kann beispielsweise aus Glas oder aus Polycarbonat bestehen. In aufgestellter Windschottposition gewährleistet der durchsichtige Abschnitt eine freie Durchsicht vom Fahrzeuginnenraum nach hinten. In geschlossener Dachposition hat das betreffende Dachteil die Funktion eines Glasdaches, durch das Licht in den Fahrzeuginnenraum einfallen kann.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht eines Cabriolet-Fahrzeuges mit einem dreiteiligen Hardtop-Fahrzeugdach, dargestellt in Schließposition,
- Fig. 2: in schematischer Darstellung eine Seitenansicht des dreiteiligen Fahrzeugdaches mit nach oben aufgeklapptem vorderem Dachteil,
- Fig. 3: eine Fig. 1 entsprechende Perspektive auf das Cabriolet-Fahrzeug, jedoch mit geöffnetem Hardtop-Fahrzeugdach, wobei das vordere Dachteil des Hardtops eine aufgestellte Windschottposition hinter den Fahrzeugsitzen einnimmt.

In den folgenden Figuren sind gleiche Bauteile mit gleichen Bezugszeichen versehen.

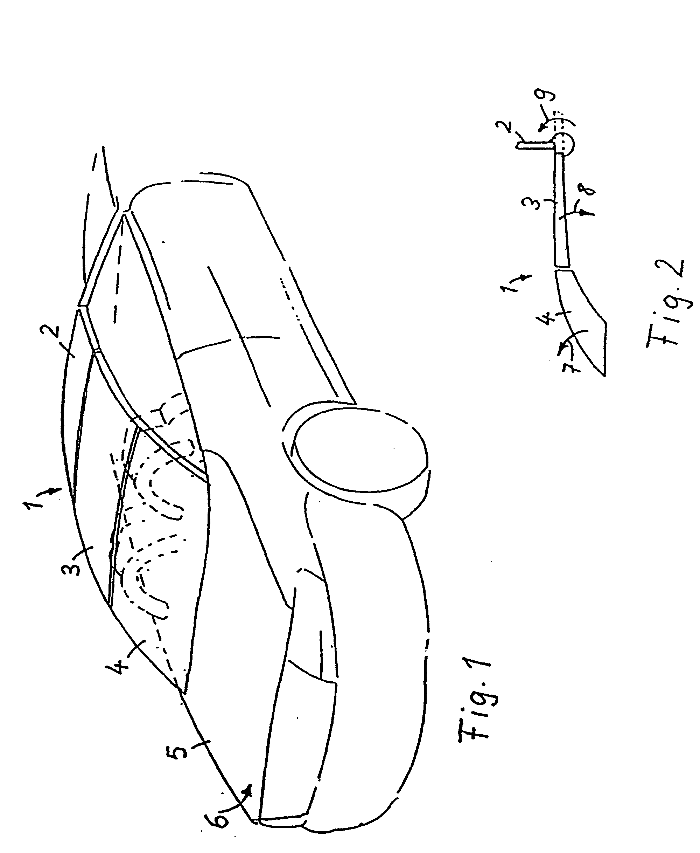

Das in Fig. 1 dargestellte Cabriolet-Fahrzeug besitzt ein dreiteiliges Hardtop-Fahrzeugdach 1 mit einem vorderen Dachteil 2, einem mittleren Dachteil 3 und einem hinteren Dachteil 4, wobei die Dachteile 2, 3 und 4 jeweils in sich starr ausgebildet sind. In der gezeigten Schließposition des Fahrzeugdaches liegen die Dachteile 2, 3 und 4 in Fahrzeuglängsrichtung gesehen unmittelbar hintereinander. Das vordere Dachteil 2 grenzt in Schließposition an einen Windschutzscheibenrahmen an und ist an diesem fixiert. Das vordere Dachteil 2 ist kinematisch mit dem mittleren Dachteil 3 gekoppelt und relativ zu diesem verschwenkbar, das mittlere Dachteil 3 ist in entsprechender Weise kinematisch mit dem hinteren Dachteil 4 gekoppelt und relativ zu diesem verschwenkbar. Das hintere Dachteil 4 ist kinematisch mit der Fahrzeugkarosserie verbunden und kann zweckmäßig ebenfalls gegenüber der Fahrzeugkarosserie eine Schwenkbewegung ausführen.

In geöffneter Position befindet sich das Fahrzeugdach in einer Ablagestellung im Heckbereich des Fahrzeuges, in welchem ein Kofferraumdeckel 5 einen Kofferraum 6 überdeckt, wobei im Ausführungsbeispiel der Kofferraum 6 identisch ist mit einem Verdeckkasten zur Aufnahme des Fahrzeugdaches in Ablageposition bzw. der Verdeckkasten einen Teil des Kofferraumes bildet. Dementsprechend übernimmt der Kofferraumdeckel 5 zugleich die Funktion eines Verdeckkastendeckels. Zum Überführen des Fahrzeugdaches 1 von der Schließposition in die Ablageposition wird der Kofferraumdeckel 5 aufgeschwenkt, so dass der darunter liegende Verdeckkasten zugänglich gemacht wird und das Fahrzeugverdeck abgelegt werden kann. Zum Schließen des Fahrzeugdaches läuft der Vorgang in entgegengesetzter Richtung ab.

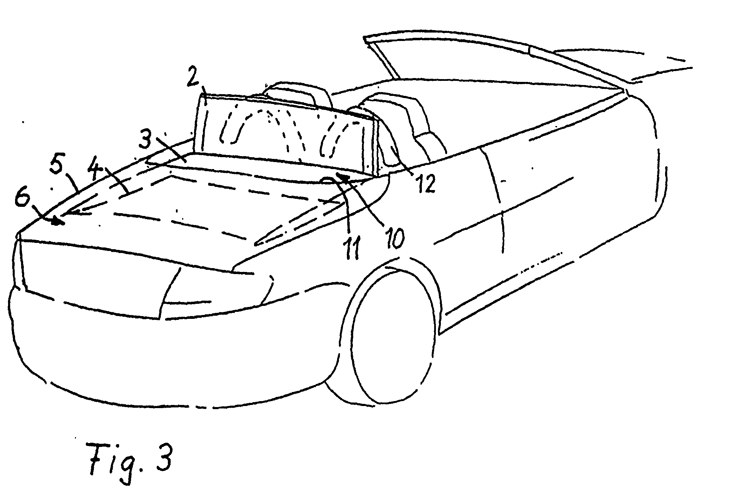

Der Seitenansicht gemäß Fig. 2 ist zu entnehmen, dass das vordere Dachteil 2 aus einer horizontalen Position, in welcher vorderes Dachteil 2 und mittleres Dachteil 3 näherungsweise in einer gemeinsamen Dachebene liegen, gemäß Pfeilrichtung 9 in eine aufgeklappte, aufrecht stehende Position überführbar ist, in welcher die Ebene des vorderen Dachteiles 2 etwa vertikal zur Ebene des mittleren Dachteiles 3 steht. Über diese Aufklappbewegung des vorderen Dachteiles 2 gegenüber dem mittleren Dachteil 3 kann die in der nachfolgenden Fig. 3 beschriebene Windschottfunktion des vorderen Dachteiles 2 eingestellt werden.

Zur Überführung des Fahrzeugdaches 1 in die Ablageposition wird zweckmäßig das hintere Dachteil 4 entsprechend der Pfeilrichtung 7 relativ zur Fahrzeugkarosserie nach hinten in den Verdeckkasten hineinverschwenkt, zugleich wird das mittlere Dachteil 3 gemäß Pfeilrichtung 8 in Bezug auf das hintere Dachteil 4 in entgegengesetzte Richtung verschwenkt, so dass die Innenseiten von mittlerem Dachteil 3 und hinterem Dachteil 4 unmittelbar aneinander liegen. Das vordere Dachteil 3 wird in Pfeilrichtung 9 in die aufrecht stehende Position nach oben geklappt.

In der Offen- bzw. Ablageposition gemäß Fig. 3 sind das hintere Dachteil 4 sowie das mittlere Dachteil 3 im Kofferraum 6 abgelegt, der Kofferraumdeckel 5 ist geschlossen. In Ablageposition liegt das hintere Dachteil 4 zuunterst im Kofferraum 6 mit der Außenseite nach unten. Das mittlere Dachteil 3 liegt auf dem unteren Dachteil 4, wobei das mittlere Dachteil 3 gleichsinnig mit nach oben weisender Außenseite abgelegt ist. Das vordere Dachteil 2 schließt sich auch in Ablageposition des Fahrzeugdaches in Fahrzeuglängsrichtung gesehen vorne liegend an das mittlere Dachteil 3 an.

Zwischen der Vorderkante 11 des Kofferraumdeckels 5 und einer Wandung, welche den Kofferraum begrenzt und die Rückwand des Fahrzeuginnenraumes bildet, ist ein Randspalt 10 gebildet, aus dem das vordere Dachteil 2 des Hardtop-Fahrzeugdaches etwa senkrecht aufragt, wodurch die Windschottfunktion des vorderen Dachteiles 2 gebildet wird. Die Breite des Randspaltes 10 ist zweckmäßig so ausgeführt, dass in Schließposition des Fahrzeugdaches gemäß Fig. 1 das hintere Dachteil 4 bündig an der Vorderkante 11 des Kofferraumes 5 anliegt. Auf Grund der Schrägstellung des hinteren Dachteiles 4 wird in Schließposition des Fahrzeugdaches üblicherweise ein etwas größerer Randspalt benötigt als in der Ablageposition, in welcher das vordere Dachteil 2 etwa senkrecht aufragt. Gegebenenfalls kann aber auch eine Konstruktion vorgesehen sein, bei der sowohl in Schließposition als auch in Ablageposition ein etwa gleich großer Randspalt für das hintere Dachteil 4 bzw. das vordere Dachteil 2 benötigt wird, so dass in beiden Positionen der Randspalt vollständig von einem Dachteil ausgefüllt ist und dementsprechend ein wasserdichter Abschluss zwischen Dachteil und Kofferraumdeckel gebildet werden kann.

Das vordere Dachteil 2 ragt in Windschottposition etwa gleich hoch auf wie ein davor liegender Überrollbügel 12 hinter den Fahrzeugsitzen. Das vordere Dachteil 2 kann vollständig oder auch nur teilweise durchsichtig ausgebildet sein, insbesondere in einem mittleren Abschnitt, und zu diesem Zweck aus Glas oder Polycarbonat bestehen.

## Patentansprüche

1. Hardtop-Fahrzeugdach mit mindestens zwei in Schließposition in Fahrzeuglängsrichtung hintereinander angeordneten Dachteilen (2, 3, 4), die zwischen einer einen Fahrzeuginnenraum überdeckenden Schließposition und einer heckseitigen Ablageposition zu verstellen sind, wobei in Ablageposition ein Dachteil (2) eine aufrecht stehende Position hinter den Fahrzeugsitzen einnimmt und ein Windschott bildet und das andere Dachteil (3, 4) in einem heckseitigen Verdeckkasten (6) verstaut ist, der von einem Verdeckkastendeckel (5) zu verschließen ist,
**dadurch gekennzeichnet,**
**dass** das das Windschott bildende Dachteil (2) bei geschlossenem Verdeckkastendeckel (5) in einen Randspalt (10) zwischen der Vorderkante (11) des Verdeckkastendeckels (5) und einer die Rückwand des Fahrzeuginnenraumes bildenden Wandung des Verdeckkastens (6) einragt.

2. Hardtop-Fahrzeugdach nach Anspruch 1,
**dadurch gekennzeichnet,**
**dass** das in Schließposition unmittelbar dem Windschutzscheibenrahmen benachbarte vordere Dachteil (2) das Windschott bildet und das hintere Dachteil (3, 4) in Ablageposition im Verdeckkasten (6) verstaut ist.

3. Hardtop-Fahrzeugdach nach Anspruch 1 oder 2,
**dadurch gekennzeichnet,**
**dass** das vordere Dachteil (2) und das hintere Dachteil (3, 4) aneinander gekoppelt und relativ zueinander verschwenkbar sind.

4. Hardtop-Fahrzeugdach nach einem der Ansprüche 1 bis 3,
**dadurch gekennzeichnet,**
**dass** das das Windschott bildende Dachteil (2) zumindest abschnittsweise durchsichtig ausgebildet ist.

5. Hardtop-Fahrzeugdach nach Anspruch 4,
**dadurch gekennzeichnet,**
**dass** der durchsichtige Abschnitt des Dachteils (2) aus Glas besteht.

6. Hardtop-Fahrzeugdach nach Anspruch 4,
**dadurch gekennzeichnet,**
**dass** der durchsichtige Abschnitt des Dachteils (2) aus Polycarbonat besteht.

7. Hardtop-Fahrzeugdach nach einem der Ansprüche 1 bis 6,
**dadurch gekennzeichnet,**
**dass** insgesamt drei in Schließposition in Fahrzeuglängsrichtung hintereinander angeordnete Dachteile (2, 3, 4) vorgesehen sind.

## Claims

1. Hardtop vehicle roof having at least two roof parts (2, 3, 4) which, in the closed position, are arranged consecutively in the longitudinal direction of the vehicle and can be displaced between a closed position, which covers a vehicle interior, and a put-away position at the rear, in which one roof part (2) takes up an upright position behind the vehicle seats and forms a wind deflector and the other roof part (3, 4) is stowed in a rear folding-top compartment (6) which is to be closed by a folding-top compartment cover (5), **characterized in that**, when the folding-top-compartment cover (5) is closed, the roof part (2) forming the wind deflector protrudes into a boundary gap (10) between the front edge (11) of the folding-top compartment cover (5) and a wall of the folding-top compartment (6) that forms the rear wall of the vehicle interior.

2. Hardtop vehicle roof according to Claim 1, **characterized in that** the front roof part (2), which, in the closed position, is directly adjacent to the windscreen frame, forms the wind deflector and the rear roof part (3, 4), in the put-away position, is stowed in the folding-top compartment (6).

3. Hardtop vehicle roof according to Claim 1 or 2, **characterized in that** the front roof part (2) and the rear roof part (3, 4) are coupled to each other and can be pivoted relative to each other.

4. Hardtop vehicle roof according to one of Claims 1 to 3, **characterized in that** the roof part (2) forming the wind deflector is at least in some sections of transparent design.

5. Hardtop vehicle roof according to Claim 4, **characterized in that** the transparent section of the roof part (2) consists of glass.

6. Hardtop vehicle roof according to Claim 4, **characterized in that** the transparent section of the roof part (2) consists of polycarbonate.

7. Hardtop vehicle roof according to one of Claims 1 to 6, **characterized in that** a total of three roof parts (2, 3, 4), which, in the closed position, are arranged consecutively in the longitudinal direction of the vehicle, are provided.

## Revendications

1. Toit rigide et amovible de véhicule, qui comprend au moins deux parties de toit (2, 3, 4) qui, dans la position de fermeture, sont disposées l'une derrière l'autre dans le sens de la longueur du véhicule et qui peuvent être déplacées entre une position de fermeture qui recouvre l'habitacle du véhicule et une position arrière de rangement, et dans la position de rangement, une partie de toit (2) prend une position debout derrière les sièges du véhicule et forme un pare-vent, l'autre partie de toit (3, 4) étant arrimée dans un caisson arrière de capote (6) qui est fermé par un capot (5) de caisson de capote,
**caractérisé en ce que**
lorsque le capot (5) du caisson de capote est fermé, la partie de toit (2) qui forme le pare-vent déborde dans un interstice de bordure (10) situé entre le bord avant (11) du capot (5) du caisson de capote et une paroi du caisson de capote (6) qui forme la paroi arrière de l'habitacle du véhicule.

2. Toit rigide et amovible de véhicule selon la revendication 1, **caractérisé en ce que** dans la position de fermeture, la partie avant de toit (2) directement voisine de l'encadrement du pare-brise forme le pare-vent, la partie arrière de toit (3, 4) étant arrimée dans le caisson de capote (6) dans la position de rangement.

3. Toit rigide et amovible de véhicule selon les revendications 1 ou 2, **caractérisé en ce que** la partie avant de toit (2) et la partie arrière de toit (3, 4) sont couplées l'une à l'autre et peuvent pivoter l'une par rapport à l'autre.

4. Toit rigide et amovible de véhicule selon l'une des revendications 1 à 3, **caractérisé en ce qu'**au moins certaines parties de la partie de toit (2) qui forme le pare-vent sont transparentes.

5. Toit rigide et amovible de véhicule selon la revendication 4, **caractérisé en ce que** la partie transparente de la partie de toit (2) est réalisée en verre.

6. Toit rigide et amovible de véhicule selon la revendication 4, **caractérisé en ce que** la partie transparente de la partie de toit (2) est réalisée en polycarbonate.

7. Toit rigide et amovible de véhicule selon l'une des revendications 1 à 6, **caractérisé en ce qu'**en tout trois parties de toit (2, 3, 4) sont prévues et sont disposées l'une derrière l'autre dans le sens de la longueur du véhicule dans la position de fermeture.
